# EUROPÄISCHE PATENTSCHRIFT

(11) **EP 2 000 945 B1**
(45) Veröffentlichungstag und Bekanntmachung des Hinweises auf die Patenterteilung: **04.08.2010**
(21) Anmeldenummer: 07010877.4
(22) Anmeldetag: 01.06.2007
(51) Int. Cl.: G06K 7/00, G06F 21/00, G06K 13/08, H01L 23/00, H05K 3/00

(54) **Manipulationsgeschützter Kartenleser**
Tamper proof card reader
Lecteur de carte protégé contre la manipulation

(43) Veröffentlichungstag der Anmeldung: 10.12.2008
(73) Patentinhaber: ddm hopt + schuler GmbH & Co. KG., 78628 Rottweil (DE)
(72) Erfinder: Hopt, Jürgen, 78628 Rottweil (DE); Storz, Michael, 78073 Bad Dürrheim (DE)
(74) Vertreter: Kohler Schmid Möbus

(56) Entgegenhaltungen:
- EP-A2- 0 889 493
- DE-A1- 3 916 783
- DE-U1- 9 105 960
- DE-U1-202006 009 983
- DE-U1-202007 001 626

## Beschreibung

Die vorliegende Erfindung betrifft einen Kartenleser, insbesondere Chipkartenleser, mit einer Kontaktiereinheit für eine durch eine Karteneinführöffnung eingeführte Karte.

Ein derartiger Kartenleser ist beispielsweise durch die EP 0 889 493 A2 bekannt geworden, gegen die Anspruch 1 abgegrenzt wurde.

Bei diesem aus EP 0 889 493 A2 bekannten Kartenleser handelt es sich um einen SIM-Kartenleser mit einem Endlagenschalter, der detektiert, ob eine Karte eingelegt wurde. Der Endlagenschalter besteht aus zwei Schaltkontakten aus Metall, die von der Karte miteinander in Verbindung gebracht werden. Dieser SIM-Kartenleser wird auf einer Platine montiert.

Weiterhin ist aus der DE 39 16 783 A1 ein Kartenleser mit einer manuell betätigbaren Schublade bekannt, die zwei Endstellungen aufweist. In der einen Endstellung ist das Einlegen oder die Entnahme einer Chip-Karte möglich, während in der anderen Endstellung die Chip-Karte durch eine Kontaktiereinheit für einen Benutzer unerreichbar an eine Lese- und Schreibvorrichtung angeschlossen ist. Ein Endkontakt ist so positioniert, dass er bei herausgezogener Schublade offen ist und erst dann schließt, wenn die Schublade ihre geschlossene Endposition erreicht hat.

Aus der DE 20 2006 009 983 U1 ist schließlich noch ein manipulationsgeschützter Kartenleser bekannt, der in einer Tasche aus einer Bohrschutzfolie mit feinmaschiger Leiterbahnstruktur angeordnet ist. Wenn die Tasche entfernt oder z.B. durch Bohren zerstört wird, werden die Leiterbahnen der Bohrschutzfolie zerstört und kann so die Manipulation erkannt werden. Auch dieser Kartenleser wird auf einer Platine montiert.

Bei bekannten Kartenlesern, die an einer Leiterplatte befestigt werden, kann der Datenaustausch mit einer Karte dadurch manipuliert werden, dass der auf einer Kundenleiterplatte angelötete Kartenleser abgelötet und von der Kundenleiterplatte abgehoben wird und die nun zugänglichen elektrischen Kontakte der Kontaktiereinheit kontaktiert werden.

Die Aufgabe der vorliegenden Erfindung ist es, einen Kartenleser der eingangs genannten Art vor solch einem Abheben zu schützen, d.h. einen "sicheren Kartenleser" bereitzustellen.

Diese Aufgabe wird erfindungsgemäß gelöst durch einen Kartenleser mit den Merkmalen von Anspruch 1.

Im befestigungsbereiten Zustand des Kartenlesers sind die jeweils zwischen der Falzlinie und den freiliegenden Kontakten liegenden Abschnitte des umbiegbaren Leiterbahnenelements, bezogen auf die Falzlinie, um mehr als 90°, aber weniger als 180° umgebogen, wodurch die beiden freiliegenden Kontakte voneinander beabstandet sind. Wird der Kartenleser auf die Kundenleiterplatte aufgesetzt, so wird das umbiegbare Leiterbahnenelement zwischen Kartenleser und Kundenleiterplatte weiter umgebogen, bis die beiden freiliegenden Kontakte elektrisch leitend aneinander anliegen und somit der durch die beiden freiliegenden Kontakte gebildete Schalter geschlossen ist. Wenn der Kartenleser zu Manipulationszwecken von der Kundenleiterplatte abgelötet oder gar entfernt wird, heben die beiden freiliegenden Kontakte aufgrund der elastischen Rückstellkraft schon bei der geringsten Anhebung des Kartenlesers voneinander ab, und der Schalter öffnet sich. Dies wird von einer Steuereinheit der Kundenleiterplatte erkannt, die dann keinen Lesevorgang mehr zulässt bzw. die Kontaktiereinheit außer Funktion setzt. Eine unbemerkte Manipulation an der Kontaktiereinheit ist somit nicht möglich, so dass ein "manipulationssicherer" Kartenleser ermöglicht wird.

Vorzugsweise ist die Kontaktiereinheit von einer an der Karteneinführöffnung offenen Bohrschutz-Tasche umgeben, die eine feinmaschige Leiterbahnstruktur mit mindestens einer durchgehenden Leiterbahn sowie eine auf der Befestigungsseite des Kartenlesers vorgesehene Aussparung aufweist, innerhalb der das umbiegbare Leiterbahnenelement vorgesehen ist. Besonders bevorzugt ist die Tasche aus mindestens einer Leiterbahnenfolie gebildet, die auch das umbiegbare Leiterbahnenelement aufweist. Wenn die Tasche entfernt oder z.B. durch Bohren zerstört wird, werden die mindestens eine durchgehende Leiterbahn, über die im Betrieb ein Strom fließt, durchtrennt. Auch dies wird von der Steuereinheit der Kundenleiterplatte erkannt, die dann keinen Lesevorgang mehr zulässt bzw. die Kontaktiereinheit außer Funktion setzt.

Vorzugsweise ist die Bohrschutz-Tasche aus einem einteiligen Leiterbahnenfolienzuschnitt gebildet, der die feinmaschige Leiterbahnstruktur, welche im aufgerichteten Zustand der Tasche die mindestens eine durchgehende Leiterbahn ausbildet, sowie das umbiegbare Leiterbahnenelement mit seinen beiden freiliegenden Kontakten aufweist..

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch eine Seitenansicht des erfindungsgemäßen Kartenlesers mit einem noch nicht umgebogenen Leiterbahnenelement (Fig. 1 a), im befestigungsbereiten Zustand mit dem umgebogenen Leiterbahnenelement (Fig. 1b) und im befestigten Zustand auf einer Kundenleiterplatte (Fig. 1 c);
- Fig. 2: den Kartenleser von Fig. 1b im befestigungsbereiten Zustand in einer perspektivischen Draufsicht auf seine Unterseite und auf seine der Karteneinführöffnung abgewandte Rückseite;
- Fig. 3: den Kartenleser von Fig. 1c im befestigten Zustand in einer perspektivischen Draufsicht auf seine Unterseite und seine Karteneinführöffnung, allerdings ohne Kundenleiterplatte; und
- Fig. 4: einen Leiterbahnenfolienzuschnitt, aus dem eine in Fign. 2 und 3 gezeigte Bohrschutz-Tasche gefaltet ist.

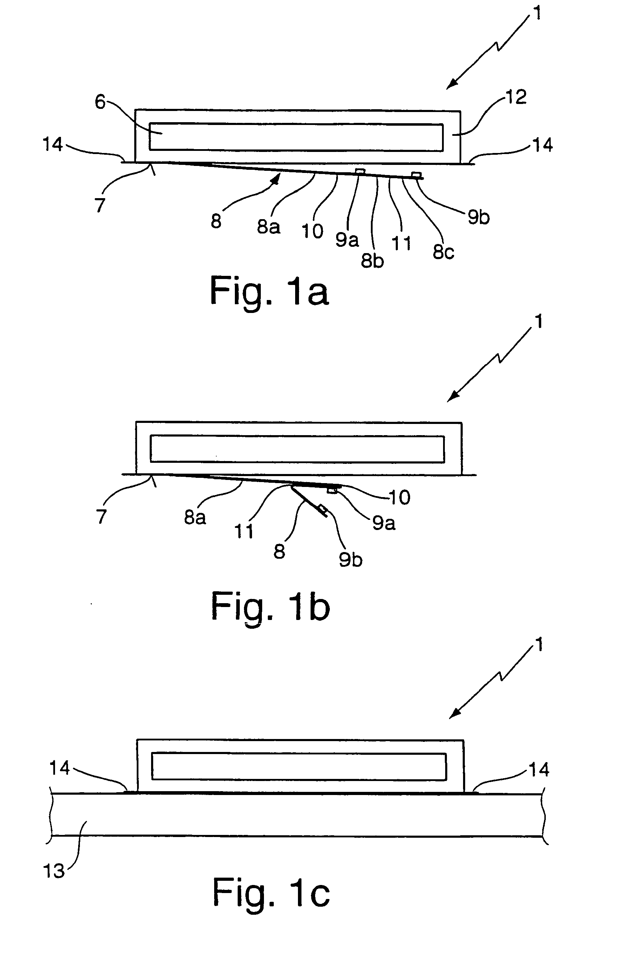

Der in Fig. 1 bis 3 gezeigte Chipkartenleser **1** weist eine Kontaktiereinheit **2** mit elektrischen Kontaktfedern **3** auf, um elektrische Kontaktfelder (nicht gezeigt) einer in die Kontaktiereinheit 2 eingeführten Chipkarte **4** zu kontaktieren. Die Chipkarte **4** trägt zum Speichern von Daten einen Mikrochip (nicht gezeigt), dessen Kontakte als elektrische Kontaktfelder auf der Kartenoberfläche vorgesehen sind. Die Chipkarte 4 wird durch den Benutzer in Einführrichtung **5** über eine Karteneinführöffnung **6** bis in ihre Datenaustauschposition in die Kontaktiereinheit 2 eingeführt und nach dem Datenaustausch vom Benutzer wieder aus der Kontaktiereinheit 2 herausgezogen (so genannter Push/Pull-Kartenleser).

Um die Kontaktiereinheit 2 vor Manipulation zu schützen, weist der Kartenleser **1** auf seiner Boden- bzw. Befestigungsseite **7** ein gegen die Wirkung einer elastischen Rückstellkraft umbiegbares Leiterbahnenelement **8** mit zwei freiliegenden elektrischen Kontakten (z.B. Goldkontakte) **9a, 9b** auf. Das Leiterbahnenelement 8 ist durch einen einseitig befestigten, einlagigen Leiterbahnenstreifen gebildet, dessen Leiterbahnen wie auch die freiliegenden Kontakten 9a, 9b auf der der Befestigungsseite 7 zugewandten Streifenseite vorgesehen sind. Durch zwei Falzlinien **10, 11** ist das umbiegbare Leiterbahnenelement 8 in drei Abschnitte unterteilt, nämlich einen ersten Abschnitt **8a,** der am Kartenlesergehäuse **12** befestigt ist, einen zweiten Abschnitt **8b,** der sich an den ersten Abschnitt 8a anschließt und den einen freiliegenden Kontakt 9a aufweist, und einen dritten Abschnitt 8c, der sich an den zweiten Abschnitt 8b anschließt und den anderen freiliegenden Kontakt 9b aufweist. In dem in **Fig. 1a** gezeigtem Ausgangszustand des Kartenlesers 1 ist das Leiterbahnenelement 8 gerade, also noch nicht umgebogen.

In dem in **Fig. 1b** gezeigten befestigungsbereiten Zustand des Kartenlesers 1 ist der zweite Abschnitt 8b um die Falzlinie 10 in Anlage an den ersten Abschnitt 8a umgebogen und an diesem angeklebt. Der erste Abschnitt 8a kann an der Befestigungsseite 7 angeklebt sein. Der dritte Abschnitt 8c ist um die Falzlinie 11 in Richtung auf den zweiten Abschnitt 8b soweit umgebogen, dass er mit dem zweiten Abschnitt 8c einen spitzen Winkel von z.B. 45° einschließt und die beiden freiliegenden Kontakte 9a, 9b nun einander gegenüberliegen, aber noch voneinander beabstandet sind.

Der Kartenleser 1 wird nun mit seiner Befestigungsseite 7 auf eine Kundenleiterplatte **13** aufgesetzt und mithilfe von vier seitlichen Kontaktbeine **14** auf der Kundenleiterplatte 13 festgelötet **(****Fig. 1c****).** Dabei wird zwischen Kartenleser 1 und Kundenleiterplatte 13 der dritte Abschnitt 8c gegen die Wirkung der elastischen Rückstellkraft weiter in Richtung auf den zweiten Abschnitt 8b umgebogen, bis die beiden freiliegenden Kontakte 9a, 9b schließlich elektrisch leitend aneinander anliegen und somit der durch die beiden freiliegenden Kontakte 9a, 9b gebildete Schalter geschlossen ist. Wenn der Kartenleser 1 zu Manipulationszwecken von der Kundenleiterplatte 13 abgelötet oder gar entfernt wird, heben die beiden freiliegenden Kontakte 9a, 9b aufgrund der elastischen Rückstellkraft schon bei der geringsten Anhebung des Kartenlesers 1 voneinander ab, und der Schalter öffnet sich. Dies wird von einer nicht gezeigten Steuereinheit der Kundenleiterplatte 13 erkannt, die dann keinen Lesevorgang mehr zulässt bzw. die Kontaktiereinheit 2 außer Funktion setzt. Eine unbemerkte Manipulation an der Kontaktiereinheit 2 ist somit nicht möglich, so dass ein "manipulationssicherer" Kartenleser 1 ermöglicht wird.

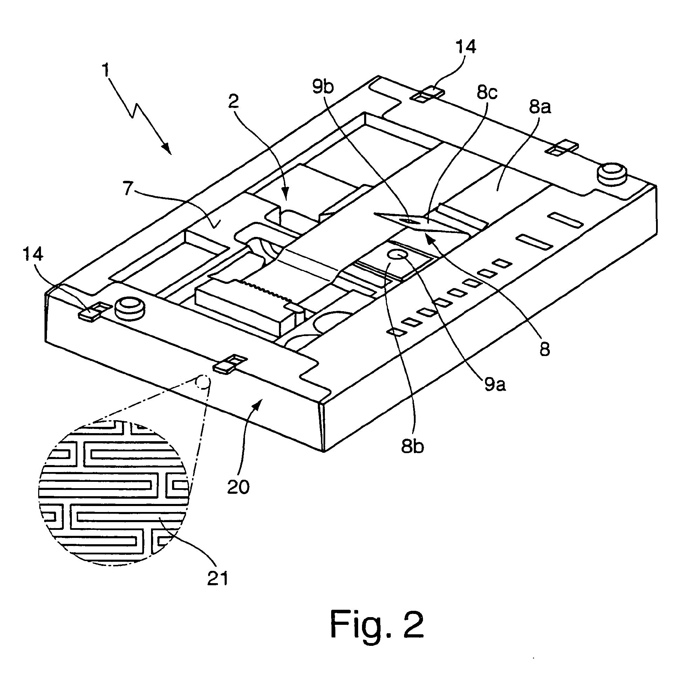

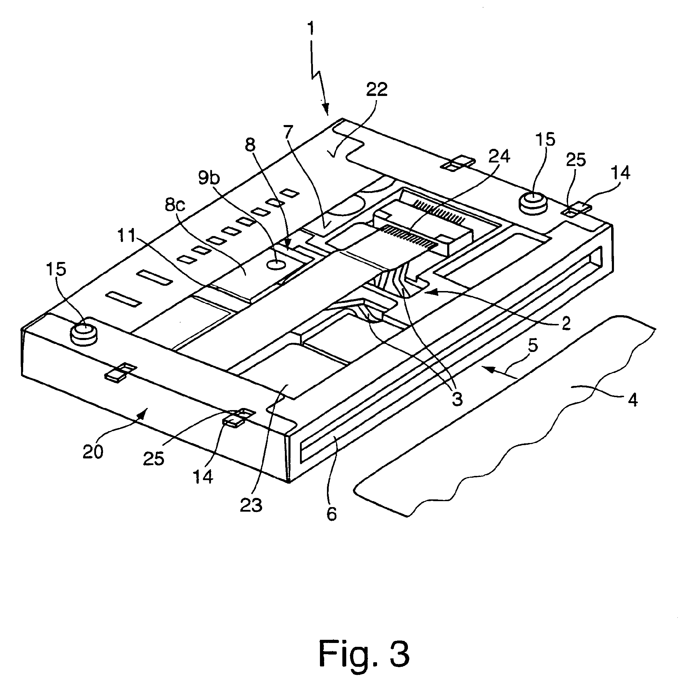

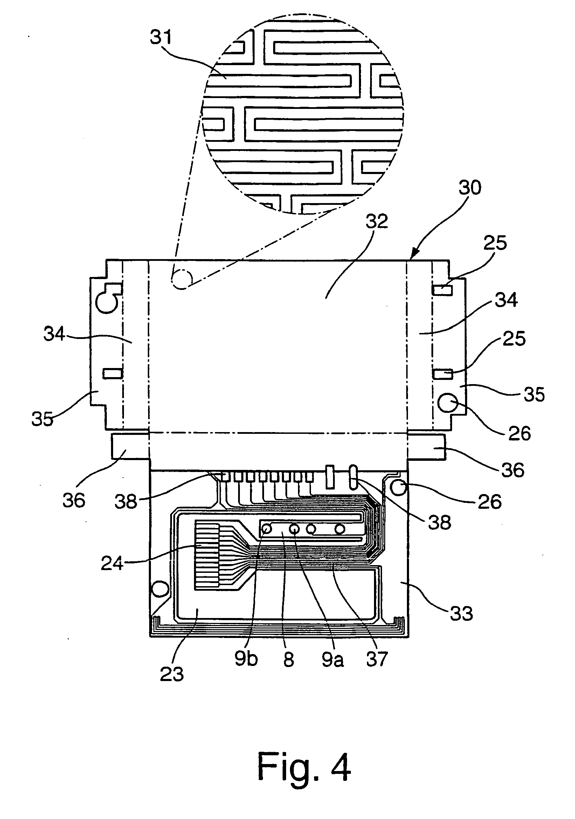

Die Kontaktiereinheit 2 ist von einer an der Karteneinführöffnung 6 offenen Bohrschutz-Tasche **20 (****Fig. 2** **und** **3****)** umgeben, die aus einem einzigen Leiterbahnenfolienzuschnitt **30 (****Fig. 4****)** gefaltet ist, welcher auch das umbiegbare Leiterbahnenelement 8 aufweist.

Die Tasche 20 weist flächendeckend eine feinmaschige (z.B. mäanderförmige) Leiterbahnstruktur mit z.B. zwei durchgehenden Leiterbahnen **21** sowie eine auf der Taschenunterseite **22** vorgesehene Aussparung **23** auf, innerhalb der die Anschlusskontakte **24** des Kartenlesers 1 und das umbiegbare Leiterbahnenelement 8 vorgesehen sind. Die Befestigung des Kartenlesers 1 auf der Kundenleiterplatte 13 erfolgt mithilfe der vier Kontaktbeine 14 der Kontaktiereinheit 2, die durch entsprechende Löcher **25** der Tasche 20 vorstehen und in SMD-Technik auf der Kundenleiterplatte 13 festgelötet werden. An zwei diagonal gegenüberliegenden Stellen weist.die Kontaktiereinheit 2 bodenseitig zwei Stifte **15** auf, die durch entsprechende Löcher **26** (Fig. 4) der Tasche 20 hindurchgreifen und so die Tasche 20 an der Kontaktiereinheit 2 positionieren.

Wie in Fig. 4 gezeigt, weist der Leiterbahnenfolienzuschnitt 30 eine flächendeckende Leiterbahnstruktur mit mehreren offenen Leiterbahnzügen **31,** die in minimalem Abstand zueinander verlaufen und im aufgerichteten Zustand der Tasche 20 die durchgehenden Leiterbahnen 22 ausbilden, sowie das umbiegbare Leiterbahnenelement 8 auf. Der Leiterbahnenfolienzuschnitt 30 weist einen die Oberseite der Tasche bildenden Deckenabschnitt **32,** einen die Unterseite der Tasche bildenden Bodenabschnitt **33** mit der Aussparung 23, drei Seitenwandabschnitte **34** mit zwei seitlichen Überlappungsabschnitten **35** und zwei Laschenabschnitte **36** auf, wobei diese Abschnitte aufgrund ihrer Flexibilität an den strichpunktiert angedeuteten Falzlinien umgebogen werden können. Beim Ausbilden der Tasche 20 werden die offenen Leiterbahnzüge 31 der einzelnen Abschnitte 32 bis 36 miteinander elektrisch verbunden, um so die beiden durchgehenden Leiterbahnen 21 auszubilden. Der Bodenabschnitt 33 weist innerhalb seiner Aussparung 23 das als Leiterbahnenstreifen ausgebildete umbiegbare Leiterbahnenelement 8 sowie einen weiteren Leiterbahnstreifen **37** auf, an dessen freiem flexiblen Ende die Anschlusskontakten 24 vorgesehen sind. Für eine Lötverbindung mit den acht Kontaktfedern der Kontaktiereinheit 2 und einem Endschalter (nicht gezeigt) sind im Bodenabschnitt 33 zehn Lötflächen (Lötpads) **38** vorgesehen. Diese zehn Lötflächen 38 und die vier Enden der beiden durchgehenden Leiterbahnen 22 sind mit den Anschlusskontakten 24 über die Leiterbahnen des Leiterbahnstreifens 37 verbunden. Die beiden freiliegenden Kontakte 9a, 9b des umbiegbaren Leiterbahnenelements 8 sind in einer der beiden durchgehenden Leiterbahnen 22 vorgesehen, so dass diese Leiterbahnbei voneinander abgehobenen Kontakten 9a, 9b unterbrochen ist. Im Leiterbahnenfolienzuschnitt 30 sind weiterhin die Löcher 25 für die Kontaktbeine 14 sowie die Löcher 26 für die Stifte 15 der Kontaktiereinheit 2 vorgesehen.

Der Kartenleser 1 wird mit seinen Anschlusskontakten 24 an einen entsprechenden Stecker (z.B. Molexstecker) der Kundenleiterplatte 13 angeschlossen und dann mithilfe der Kontaktbeine 14 auf der Kundenleiterplatte 13 befestigt. Wenn die Tasche 20 entfernt oder z.B. durch Bohren zerstört wird oder wenn die Kontaktiereinheit 2 von der Kundenleiterplatte 13 angehoben wird, werden eine oder beide durchgehenden Leiterbahnen 21, über die im Betrieb ein Strom fließt, durchtrennt. Dies wird von der Steuereinheit der Kundenleiterplatte 13 erkannt, die in diesem Fall keinen Lesevorgang mehr zulässt bzw. die Kontaktiereinheit 2 außer Funktion setzt.

## Patentansprüche

1. Kartenleser (1) mit einer Kontaktiereinheit (2) für eine durch eine Karteneinführöffnung (6) einführbare Karte (4),
**dadurch gekennzeichnet,**
**dass** auf einer zum Aufsetzen auf eine Leiterplatte (13) vorgesehenen Befestigungsseite (7) des Kartenlesers (1) ein gegen die Wirkung einer elastischen Rückstellkraft in sich umbiegbares Leiterbahnenelement (8) mit zwei freiliegenden elektrischen Kontakten (9a, 9b) vorgesehen ist, die in einer Leiterbahn (21) des umbiegbaren Leiterbahnenelements (8) als elektrischer Schalter zum Unterbrechen oder Durchschalten der Leiterbahn (21) vorgesehen sind,
**dass** das Leiterbahnenelement (8) zwischen seinen beiden freiliegenden Kontakten (9a, 9b) umbiegbar ist, bis die beiden freiliegenden Kontakte (9a, 9b) gegen die Wirkung der elastischen Rückstellkraft elektrisch leitend aneinander anliegen und die Leiterbahn (21) durchschalten,
und **dass** in einem zum Aufsetzen auf die Leiterplatte (13) befestigungsbereiten Zustand des Kartenlesers (1) das Leiterbahnenelement (8) zwischen seinen beiden freiliegende Kontakten (9a, 9b) um mehr als 90°, aber weniger als 180° umgebogen ist und **dadurch** die beiden freiliegenden Kontakten (9a, 9b) nicht miteinander elektrisch verbunden sind.

2. Kartenleser nach Anspruch 1, **dadurch gekennzeichnet, dass** das umbiegbare Leiterbahnenelement (8) zumindest zwischen seinen beiden freiliegenden Kontakten (9a, 9b) eine Falzlinie (11) aufweist.

3. Kartenleser nach Anspruch 2, **dadurch gekennzeichnet, dass** im befestigungsbereiten Zustand des Kartenleser (1) die jeweils zwischen der Falzlinie (11) und den freiliegenden Kontakten (9a, 9b) liegenden Abschnitte (8b, 8c) des umbiegbaren Leiterbahnenelements (8), bezogen auf die Falzlinie (11), um mehr als 90° umgebogen sind.

4. Kartenleser nach einem der vorhergehenden Ansprüche, **dadurch gekennzeichnet, dass** das umbiegbare Leiterbahnenelement (8) durch einen einseitig befestigten Leiterbahnenstreifen gebildet ist.

5. Kartenleser nach einem der vorhergehenden Ansprüche, **dadurch gekennzeichnet, dass** das umbiegbare Leiterbahnenelement (8) einlagig mit nur auf einer Seite vorgesehenen Leiterbahnen oder doppellagig mit auf beiden Seiten vorgesehenen Leiterbahnen ausgebildet ist.

6. Kartenleser nach einem der vorhergehenden Ansprüche, **dadurch gekennzeichnet, dass** das umbiegbare Leiterbahnenelement (8) einen einseitig befestigten ersten Abschnitt (8a), einen sich an den ersten Abschnitt (8a) anschließenden zweiten Abschnitt (8b), der den einen freiliegenden Kontakt (9a) aufweist, und einen sich an den zweiten Abschnitt (8b) anschließenden dritten Abschnitt (8c), der den anderen freiliegenden Kontakt (9a) aufweist, umfasst, wobei die beiden freiliegenden Kontakte (9a, 9b) auf der der Befestigungsseite (7) zugewandten Seite des umbiegbaren Leiterbahnenelements (8) vorgesehen sind, und dass die drei Abschnitte (8a-8c) Z-förmig umbiegbar bzw. umgebogen sind.

7. Kartenleser nach einem der vorhergehenden Ansprüche, **dadurch gekennzeichnet, dass** die Kontaktiereinheit (2) von einer an der Karteneinführöffnung (6) offenen Bohrschutz-Tasche (20) umgeben ist, die eine feinmaschige Leiterbahnstruktur mit mindestens einer durchgehenden Leiterbahn (22) sowie das umbiegbare Leiterbahnenelement (8) aufweist.

8. Kartenleser nach Anspruch 7, **dadurch gekennzeichnet, dass** die Tasche (20) auf der den Boden des Kartenlesers (1) bildenden Taschenunterseite (22) eine Aussparung (23) aufweist, innerhalb der das umbiegbare Leiterbahnenelement (8) vorgesehen ist.

9. Kartenleser nach Anspruch 7 oder 8, **dadurch gekennzeichnet, dass** die Tasche (20) aus mindestens einer Leiterbahnenfolie (30) gebildet ist, die auch das umbiegbare Leiterbahnenelement (8) aufweist.

10. Kartenleser nach einem der Ansprüche 7 bis 9, **dadurch gekennzeichnet, dass** die Bohrschutz-Tasche (20) aus einem einteiligen Leiterbahnenfolienzuschnitt (30) gebildet ist, der die feinmaschige Leiterbahnstruktur, welche im aufgerichteten Zustand der Tasche (20) die mindestens eine durchgehende Leiterbahn (22) ausbildet, sowie das umbiegbare Leiterbahnenelement (8) mit seinen beiden freiliegenden Kontakten (9a, 9b) aufweist.

## Claims

1. Card reader (1) comprising a contact unit (2) for a card (4) which can be inserted through a card insertion opening (6),
**characterized in that**
a conductor path element (8) which can be bent against the action of an elastic restoring force and comprises two exposed electrical contacts (9a, 9b) is provided on a mounting side (7) of the card reader (1), which is intended to be disposed onto a printed circuit board (13), the exposed electrical contacts being provided in a conductor path (21) of the bendable conductor path element (8) as an electrical switch for interrupting or interconnecting the conductor path (21),
the conductor path element (8) can be bent between its two exposed contacts (9a, 9b) until the two exposed contacts (9a, 9b) abut each other in an electrically conducting fashion against the action of the elastic restoring force and interconnect the conductor path element (21),
and the conductor path element (8) is bent between its two exposed contacts (9a, 9b) through more than 90°, but less than 180° in the state of the card reader (1) in which it is ready to be mounted, thereby the two exposed contacts (9a, 9b) being not electrically connected to each other.

2. Card reader according to claim 1, **characterized in that** the bendable conductor path element (8) has a fold line (11) at least between its two exposed contacts (9a, 9b).

3. Card reader according to claim 2, **characterized in that** in the state of the card reader (1), in which it is ready to be mounted, the sections (8b, 8c) of the bendable conductor path element (8), which are arranged in each case between the fold line (11) and the exposed contacts (9a, 9b), are bent through more than 90° with respect to the fold line (11).

4. Card reader according to any one of the preceding claims, **characterized in that** the bendable conductor path element (8) is formed by a unilaterally mounted conductor path strip.

5. Card reader according to any one of the preceding claims, **characterized in that** the bendable conductor path element (8) has a one-layer design with the conductor paths being provided on only one side, or a two-layer design with the conductor paths being provided on both sides.

6. Card reader according to any one of the preceding claims, **characterized in that** the bendable conductor path element (8) has a unilaterally mounted first section (8a), a second section (8b) which joins the first section (8a) and has an exposed contact (9a), and a third section (8c) which joins the second section (8b) and has the other exposed contact (9a), wherein the two exposed contacts (9a, 9b) are provided on the side of the bendable conductor path element (8) facing the mounting side (7) and the three sections (8a - 8c) are or can be bent in a Z-shape.

7. Card reader according to any one of the preceding claims, **characterized in that** the contact unit (2) is surrounded by a drill protection pocket (20) which is open at the card insertion opening (6) and comprises a fine-meshed conductor path element structure with at least one continuous conductor path element (22) and with the bendable conductor path element (8).

8. Card reader according to claim 7, **characterized in that** the pocket (20) has a recess (23) on the lower side (22) of the pocket which forms the bottom of the card reader (1), within which the bendable conductor path element (8) is provided.

9. Card reader according to claim 7 or 8, **characterized in that** the pocket (20) is formed from at least one conductor path foil (30) which also comprises the bendable conductor path element (8).

10. Card reader according to any one of the claims 7 through 9, **characterized in that** the drill protection pocket (20) is formed from a one-piece conductor path foil blank (30), which comprises the fine-meshed conductor path structure which forms the at least one continuous conductor path (22) in the erected state of the pocket (20), as well as the bendable conductor path element (8) with its two exposed contacts (9a, 9b).

## Revendications

1. Lecteur de carte (1) avec une unité de contact (2) pour une carte pouvant être introduite à travers une ouverture d'introduction de carte (6),
**caractérisé en ce**
**qu'**il est prévu sur un côté de fixation (7) du lecteur de carte (1) prévu pour le montage sur une carte de circuit imprimé (13) un élément à pistes conductrices (8) pliable contre l'action d'une force de rappel élastique et présentant deux contacts électriques découverts (9a, 9b) qui sont prévus sur une piste conductrice (21) de l'élément à pistes conductrices pliable (8) comme commutateurs électriques pour interrompre ou connecter la piste conductrice (21),
**que** l'élément à pistes conductrices (8) peut être plié entre ses deux contacts découverts (9a, 9b) jusqu'à ce que les deux contacts découverts (9a, 9b) soient appliqués l'un contre l'autre de manière électroconductrice contre l'action de la force de rappel élastique et connectent la piste conductrice (21),
et **que** dans un état prêt à la fixation du lecteur de cartes (1) pour le montage sur la carte de circuit imprimé (13), l'élément à pistes conductrices (8) est plié entre ses deux contacts découverts (9a, 9b) de plus de 90° mais de moins de 180° et de ce fait les deux contacts découverts (9a, 9b) ne sont pas reliés entre eux électriquement.

2. Lecteur de carte selon la revendication 1, **caractérisé en ce que** l'élément à pistes conductrices pliable (8) présente une ligne de pliage (11) au moins entre ses deux contacts découverts (9a, 9b).

3. Lecteur de carte selon la revendication 2, **caractérisé en ce que** dans un état prêt à la fixation du lecteur de cartes (1) les portions (8b, 8c) de l'élément à pistes conductrices pliable (8) respectivement situées entre la ligne de pliage (11) et les contacts découverts (9a, 9b) sont pliées de plus de 90° par rapport à la ligne de pliage (11).

4. Lecteur de carte selon une des revendications précédentes, **caractérisé en ce que** l'élément à pistes conductrices pliable (8) est formé par une bande de piste conductrice fixée d'un côté.

5. Lecteur de carte selon une des revendications précédentes, **caractérisé en ce que** l'élément à pistes conductrices pliable (8) est réalisé à une couche avec des pistes conductrices prévues seulement d'un côté ou à deux couches avec des pistes conductrices prévues des deux côtés.

6. Lecteur de carte selon une des revendications précédentes, **caractérisé en ce que** l'élément à pistes conductrices pliable (8) comprend une première portion (8a) fixée d'un côté, une deuxième portion (8b) qui se raccorde à la première portion (8a) et présente un contact découvert (9a), et une troisième portion (8c) qui se raccorde à la deuxième portion (8b) et présente l'autre contact découvert (9a), les deux contacts découverts (9a, 9b) étant prévus du côté de l'élément à pistes conductrices pliable (8) tourné vers le côté de fixation (7), et que les trois portions (8a-8c) sont pliables ou pliées en Z.

7. Lecteur de carte selon une des revendications précédentes, **caractérisé en ce que** l'unité de contact (2) est entourée par une cage de protection anti-perçage (20) ouverte à l'ouverture d'introduction de carte (6), qui présente une structure de pistes conductrices à mailles fines avec au moins une piste conductrice continue (22) ainsi que l'élément à pistes conductrices pliable (8).

8. Lecteur de carte selon la revendication 7, **caractérisé en ce que** la cage (20) présente du côté inférieur de cage (22) formant le fond du lecteur de cartes (1) un évidement (23) à l'intérieur duquel l'élément à pistes conductrices pliable (8) est prévu.

9. Lecteur de carte selon la revendication 7 ou 8, **caractérisé en ce que** la cage (20) est formée d'au moins une membrane à pistes conductrices (30) qui présente aussi l'élément à pistes conductrices pliable (8).

10. Lecteur de cartes selon une des revendications 7 à 9, **caractérisé en ce que** la cage de protection anti-perçage (20) est formée d'une découpe de membrane à pistes conductrices (30) en une seule pièce qui présente la structure de pistes conductrices à mailles fines, laquelle, dans l'état monté de la cage (20), forme ladite au moins une piste conductrice continue (22) et présente l'élément à pistes conductrices pliable (8) avec ses deux contacts découverts (9a, 9b).
